# EUROPEAN PATENT SPECIFICATION

(11) **EP 3 838 687 B1**
(45) Date of publication and mention of the grant of the patent: **20.11.2024**
(21) Application number: 19216379.8
(22) Date of filing: 16.12.2019
(51) Int. Cl.: G01P 15/08, G01P 1/02, G01P 15/09, G01P 15/125

(54) **AN IMPACT DETECTION AND PROTECTION SYSTEM FOR A VEHICLE**
AUFPRALLERKENNUNGS- UND AUFPRALLSCHUTZSYSTEM FÜR EIN FAHRZEUG
SYSTÈME DE DÉTECTION ET DE PROTECTION D'IMPACT POUR UN VÉHICULE

(43) Date of publication of application: 23.06.2021
(73) Proprietor: Veoneer Sweden Safety Systems AB, 10302 Stockholm (SE)
(72) Inventor: HÖFELSAUER, Herbert, 85716 Unterschleißheim (DE)
(74) Representative: Reichert & Lindner Partnerschaft Patentanwälte

(56) References cited:
- EP-A1- 1 535 805
- WO-A1-03/082639
- JP-A- 2000 177 514
- US-A- 4 951 510

## Description

### Field of the Invention

The invention relates to an impact detection and protection system for a vehicle

### Description of the Background Art

EP 2 709 877 B1 relates to a motor vehicle comprising a fender provided at the front and the rear and at least one sensor device, which has a capacitively operating sensor. The sensor device has an associated control device for collision detection, wherein the sensor is arranged on a fender. The sensor is formed as a surface sensor which extends over at least half the width of the fender. The control device is able to determine information resulting from a collision with an object by using the capacitance of the sensor, which changes as a result of collision-induced deformation of the sensor.

WO 03/082639 A1 describes an impact detector for detecting and evaluating an impact and generating an output signal to deploy a pedestrian protection system on a motor vehicle The impact detector includes a sensor arrangement to be mounted at the front of the vehicle to detect an impact. An evaluator is provided to evaluate the output of the sensor and to generate an output signal when a predetermined threshold is exceeded, so that the pedestrian protection system is not actuated by an impact with a very light object. In addition, a chassis-mounted accelerometer is provided to provide a signal indicative of the total deceleration applied to the vehicle. An inhibitor is provided to inhibit generation of the signal that actuates the pedestrian protection system, if the output signal from the accelerometer exceeds a predetermined threshold.

JP 2000 177514 A discloses a collision discriminating device for a vehicle comprising a collision detecting means for detecting the collision on the basis of the deformation of a collided surface of vehicle. The collision detecting means is formed by an electrostatic capacity-type collision detecting sensor part formed by counter electrodes mounted on the collision surface at specific intervals and a dielectric formed by an elastic member inserted between the counter electrodes. EP 1 535 805 A1 discloses an impact sensing device. A sealed chamber, filled with a pressure medium, is provided. At least one surface acoustic wave device is associated to said sealed chamber for sensing a pressure inside said pressure chamber. The sealed chamber is designed to be arranged in a vehicle at a location where an impact during a collision situation is to be sensed. The surface acoustic wave device includes at least one surface acoustic wave resonator and an antenna for remotely communicating with a control unit arranged within said vehicle.

US 9,650,013 B1 relates to a pedestrian protection system for a vehicle. The protection system having at least one impact-detecting sensor and a deformable element that are arranged between a cross-member and a bumper cover of the vehicle. A control unit is provided that analyses the signals of the at least one sensor. In order to reduce the amount of space required, the deformable element is designed as a deformable member that has a cavity in which the at least one sensor is arranged and the at least one sensor detects changes in an electromagnetic field in the cavity.

US 4 951 510 A shows a multidimensional force sensor with a multibeam structure for measuring displacement of one or more response elements to detect multiple components of applied force. The displacement of the response element is detected with a variety of sensing methods including capacitive and piezoresistive sensing.

### Summary of the invention

It is therefore an object of the present invention to an impact detection and protection which has redundancy, provides an impact recognition, enables a diagnosis and allows a simplified integration in a vehicle.

The above object is achieved by an impact detection and protection system for a vehicle which comprises the features of claim 1.

According to an inventive embodiment an impact detection and protection system defines an axis. Especially a sensor is used to provide some protection for a pedestrian in case an impact happens. The axis is essentially parallel to or aligned with a front face of a vehicle. The sensor of impact detection and protection system has at least one sensor element of a first type, which is oriented along the axis of the sensor. Additionally, the sensor has a plurality of sensor elements of a second type, which are oriented and uniformly distributed along the axis of the sensor. The advantage of the two different sensor types is a redundancy, wherein both sensor types are integrated in one sensor. Furthermore, the sensor allows the determination of location of the impact at the front side of the vehicle. The impact location can be achieved by the at least one sensor element of the first type and/or the plurality of sensor elements of the second type.

According to the embodiment of the invention the at least one sensor element of the first type is a capacitive sensor and the plurality of sensor elements of the second type are piezoelectric sensor elements. According to an example, that is not part of the claimed invention, the at least one sensor element of the first type is a capacitive sensor and the plurality of sensor elements of the second type are accelerometers. According to a still further example, that is not part of the claimed invention, the at least one sensor element of the first type is a capacitive sensor and the plurality of sensor elements of the second type are force sensitive sensor elements. Moreover, the plurality of sensor elements of the second type can be as well a mixture above mentioned sensor elements of the second type.

According to one possible embodiment of the invention the sensor of impact detection and protection system comprises one single sensor element of the first type and the plurality of sensor elements of the second type. The plurality of sensor elements of the second type are oriented and are separated equally along the axis of the sensor. According to a further embodiment the plurality of sensor elements of the second type can separated unequally along the axis of the sensor. The axis of the sensor is essentially parallel to the orientation of the sensor element of the first type.

For the collection of signals from the at least one sensor element of the first type, the at least one sensor element is electrically connected by a wiring to a first amplifier. According to a preferred embodiment the sensor comprises one single capacitive sensor, which is connected to the first amplifier. The operating mode of the at least one capacitive sensor is that an impact causes a distance change of the two electrodes of the capacitive sensor. The change in distance of the electrodes results in a capacitive change, which is amplified and used for the verification of the impact.

According to one possible embodiment of the invention each of the plurality of sensor elements of the second type is electrically connected by a wiring to a second amplifier.

The sensor comprises for example eight sensor elements of the second type (piezoelectric sensor elements). The eight piezoelectric sensor elements are connected to eight channels of the second amplifier by an individual wiring.

According to another possible embodiment of the invention two of the plurality of sensor elements of the second type are commonly connected by a wiring to the second amplifier. Consequently, the second amplifier has four channels to which the eight piezoelectric sensor elements are connected in pairs.

According to an example, that is not part of the claimed invention, of the impact detection and protection system, the pairing of the eight piezoelectric sensor elements is such that the first and the third piezoelectric sensor elements are connected to the first channel, the second and the fifth piezoelectric sensor elements are connected to the second channel, the fourth and the seventh piezoelectric sensor elements are connected to the third channel and the sixth and the eighth piezoelectric sensor elements are connected to the forth channel. The advantage of this example is the minimum wiring for the capacitive sensor element and a location resolution between the left, the right and the middle of the sensor.

According to a further example, that is not part of the claimed invention, of the impact detection and protection system, the pairing of the eight piezoelectric sensor elements is such that the first and the eighth piezo electric sensor elements are connected to the first channel, the second and the seventh piezoelectric sensor elements are connected to the second channel, the third and the sixth piezoelectric sensor elements are connected to the third channel and the fourth and the fifth piezoelectric sensor elements are connected to the fourth channel. The advantage of this example is the minimum wiring for the capacitive sensor element and symmetric areas on the left and the right of the sensor.

According to a further embodiment of impact detection and protection system the amplifier for the one capacitive sensor element and the amplifier for the eight piezoelectric sensor elements are combined in one printed circuit board. The printed circuit board is provided at one end of the sensor. The advantage of this arrangement is a simplification of the wiring to the amplifier for the capacitive sensor element and the amplifier for piezoelectric sensor elements. As mentioned above the arrangement of the piezoelectric sensor elements provides a location resolution of the location of impact. According to a further example, that is not part of the claimed invention, all the piezoelectric sensor elements of the sensor can be connected to ground potential.

In order to use the inventive sensor in the field, a carrier for the sensor is provided. According to the embodiment, the sensor is enclosed within the carrier. The carrier is deformable by an impacting object (for example a pedestrian). The impact causes a deformation and an electrical signal from the at least one sensor element of the first type and the plurality of sensor elements of the second type.

According to the embodiment of the invention of the impact detection and protection system the carrier has a first foam element and a second foam element. The first foam element and the second foam element enclose the sensor and are in mechanical contact with the sensor. At least the first foam element, being essentially perpendicular to the direction of driving, is deformable by the impact of the object. The impact causes a deformation and an electrical signal from the at least one sensor element of the first type and the plurality of sensor elements of the second type. The sensor elements of the second type provide information about the location of the impact.

According to the embodiment of the invention a plurality of dome shaped cavities are formed in the first foam element. Each of the dome shaped cavities defines an apex and is open to the second foam element. One single sensor element, which is a piezoelectric sensor element, of the plurality of sensor elements of the second type is attached to the apex. The at least one sensor element of the first type of the sensor is supported by the second foam element of the carrier. In the embodiment as discussed here the domes are oriented towards the direction of impact. According to another embodiment, the domes can be oriented with the apex pointing toward a structural element (cross member) of the vehicle.

According to one possible embodiment of the invention the sensor, configured for use and mounting in a vehicle, comprises the carrier with the enclosed sensor, which is surrounded by a sealing. The sealing has at one end a welded end and at an opposite end the sealing is attached to an inner wall of a housing (end cap). According to a preferred embodiment the sealing can be attached to the inner wall of the housing with a glue. The housing is closed at one end by the sealing, which is attached to the inner wall of the housing, and at the other end by a connector.

A printed circuit board is placed inside the housing. The first amplifier and the second amplifier are realized on the printed circuit board. The at least one sensor element of the first type is connected by a wiring to the first amplifier and the plurality of sensor elements of the second type are connected by a wiring to the second amplifier.

According to a preferred embodiment of impact detection and protection system the second amplifier has four channels and the wiring for the plurality of sensor elements of the second type is such that the plurality of sensor elements of the second type are grouped and connected to the four channels. The first amplifier and the second amplifier are connected to a digital interface, which is a digital, two-wire interface for sensors in vehicle electronics. According to an example, that is not part of the claimed invention, the first amplifier, the second amplifier and the digital interface are realized by an ASIC.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure. The mentioned numbers of the sensor elements of the first type and the sensor elements of the second type are utilised to explain the invention and should not be regarded as a limiting factor of the invention.

### Brief description of the drawings

The numerous advantages of the disclosure may be better understood by those skilled in the art by reference to the accompanying figures in which:
**FIG. 1** shows a prior art sensor for an impact protection system.
**FIG. 2** shows an inventive sensor for an impact protection system with two different types of sensor elements according to one embodiment of the invention.
**FIG. 3** shows a sensor for an impact protection system with two different types of sensor elements according to a further embodiment of the invention.
**FIG. 4** shows a sensor for an impact protection system with two different types of sensor elements according the embodiment of Fig. 3 but with a different wiring.
**FIG. 5** shows a sensor for an impact protection system with two different types of sensor elements according the embodiment of Fig. 3 but with another embodiment of the wiring.
**FIG. 6** shows a sensor for an impact protection system with two different types of sensor elements according the embodiment of Fig. 3 but with a further embodiment of the wiring.
**FIG. 7** shows a sensor for an impact protection system with two different types of sensor elements according the embodiment of Fig. 3 but with a further embodiment of the wiring.
**FIG. 8** shows a schematic view of a carrier for the embedded sensor.
**FIG. 9** shows a cross section of the carrier along line B-B of Fig 8.
**FIG. 10** shows a cross section of another embodiment of the carrier along line B-B of Fig 8.
**FIG. 11** shows a partial view of the sensor layered between a first and a second element of the carrier.
**FIG. 12** shows an embodiment of the formation of the carrier which houses the piezoelectric sensor elements and the capacitive sensor element.
**FIG. 13** shows an enlarged view of the placement of a piezoelectric sensor element within the carrier.
**FIG. 14** shows an enlarged view of the deformation of the dome shaped cavity due to an occurred collision which causes a sensing signal by the piezoelectric sensor element.
**FIG. 15** shows a schematic, partial view of the arrangement of the capacitive sensor elements and the piezoelectric sensor elements.
**FIG. 16** shows a schematic, partial view of another embodiment of the arrangement of the capacitive sensor elements and the piezoelectric sensor elements.
**FIG. 17** shows an embodiment of the arrangement of at least one sensor element of the first type (capacitive sensor element) in the carrier.
**FIG. 18** shows the effect of a collision on the capacitive sensor element in the carrier.
**FIG. 19** shows the effect of a collision on the capacitive sensor element according to the arrangement shown in the embodiment of Fig. 17.
**FIG. 20** shows a schematic side view of the integration of the sensor in a sensor device.
**FIG. 21** shows a schematic top view of the integration of the sensor in the sensor device of Fig. 20.
**FIG. 22** shows a detailed view of the mounting the sensor to the housing.
**FIG. 23** shows a schematic view of the arrangement of the components of the system according to one embodiment.
**FIG. 24** shows a schematic view of the placement of the electronics in relation to the sensor.
**FIG. 25** shows an alternative embodiment of the inventive sensor.
**FIG. 26** shows a schematic view of a further embodiment of the placement of the electronics in relation to the inventive sensors.
**FIG. 27** shows a schematic view of an additional embodiment of the placement of the electronics in relation to the inventive sensors.
**FIG. 28** shows a schematic view of an additional embodiment of the placement of the electronics in relation to the inventive sensors.

### Detailed description

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

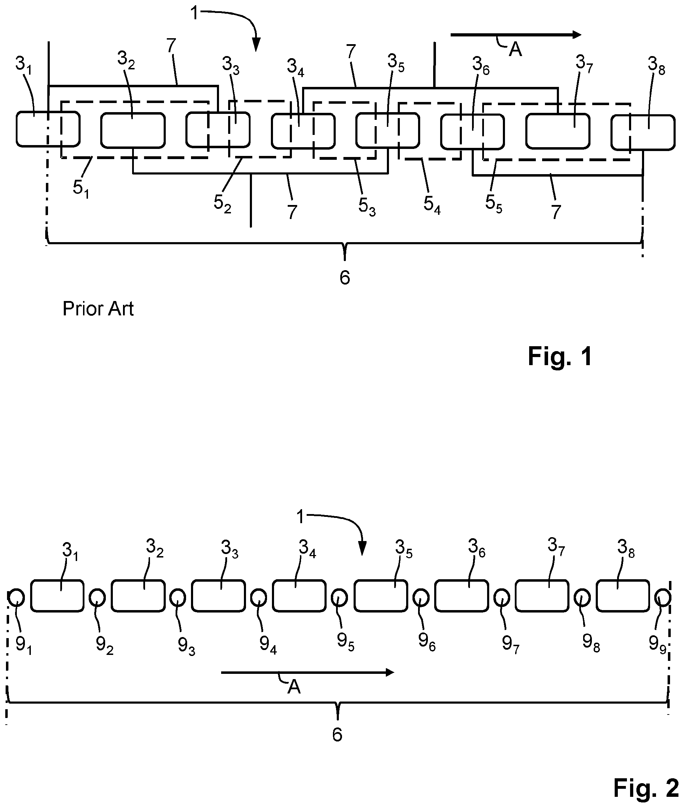

**FIG. 1** shows a sensor 1 for an impact detection and protection system according to the prior art. The sensor 1 comprises a plurality of sensor elements 3₁, 3₂,...,3_{M} of a first type, arranged along an axis A of the sensor 1. The sensor elements 3₁, 3₂,...,3_{M} of the first type are capacitive sensor elements. In the embodiment shown here eight sensor elements 3₁, 3₂,...,3₈ are arranged along an axis A of the sensor 1. The eight sensor elements 3₁, 3₂,...,3s are connected by a wiring 7 so that the first sensor element 3, and the third sensor element 3₃, the second sensor element 3₂ and the fifth sensor element 3₅, the forth sensor element 3₄ and the seventh sensor element 3₇, and the sixth sensor element 3₆ and the eighth sensor element 3s are connected electronically. This results in five different zones 5₁, 5₂,..., 5₅ which provide five different and distinct areas of impact. With the wiring 7 mentioned above the sensor 1 defines an effective range 6 along the axis A of the sensor 1 with a redundancy effect. The redundancy effect means that always two sensor elements 3₁, 3₂,..., 3₈ per zone 5₁, 5₂,..., 5₅ are affected at the occurrence of an impact.

The **Figures 2** to **7** show various embodiments of a sensor 1 for an impact detection and protection system. It is to be understood that the number of the sensor elements 3₁, 3₂,...,3_{M} of a first type and the number of the sensor elements 9₁, 9₂,...,9_{O} of a second type mentioned in the specification below are exemplary and explanatory only and are not necessarily restrictive of the invention as claimed. Figures 2 - 7 are incorporated in and constitute a part of the specification, illustrate embodiments of the invention and together with the general description, serve to explain the principles of the invention.

**Figure 2** shows a sensor 1 for an impact detection and protection system with two different types of sensor elements according to one embodiment of the invention. According the embodiment shown here, the sensor 1 comprises eight sensor elements 3₁, 3₂,...,3s of a first type and nine sensor elements 9₁, 9₂,...,9₉ of a second type, both of which are oriented and uniformly distributed along the axis A of the sensor 1. The eight sensor elements 3₁, 3₂,...,3₈ of the first type and the nine sensor elements 9₁, 9₂,...,9₉ of the second type are arranged such that each sensor element 3₁, 3₂,...,3₈ of the first type is located between two sensor elements 9₁, 9₂,...,9₉ of the second type. In the embodiment shown here the sensor elements 3₁, 3₂,..., 3₈ of the first type are capacitive sensor elements and the sensor elements 9₁, 9₂,...,9₉ of the second type are piezoelectric sensor elements. Both the capacitive sensor elements and the piezoelectric sensor elements are distributed homogeneously and uniformly along the axis A of the sensor 1. The effective range 6 stretches from the first sensor element 9₁ of the second type to the last sensor element 9₉ of the second type. For sensing an impact at least one sensor element 3₁, 3₂,..., 3₈ of the first type and one neighbouring sensor element 9₁, 9₂,...,9₉ of the second type must sense and be affected.

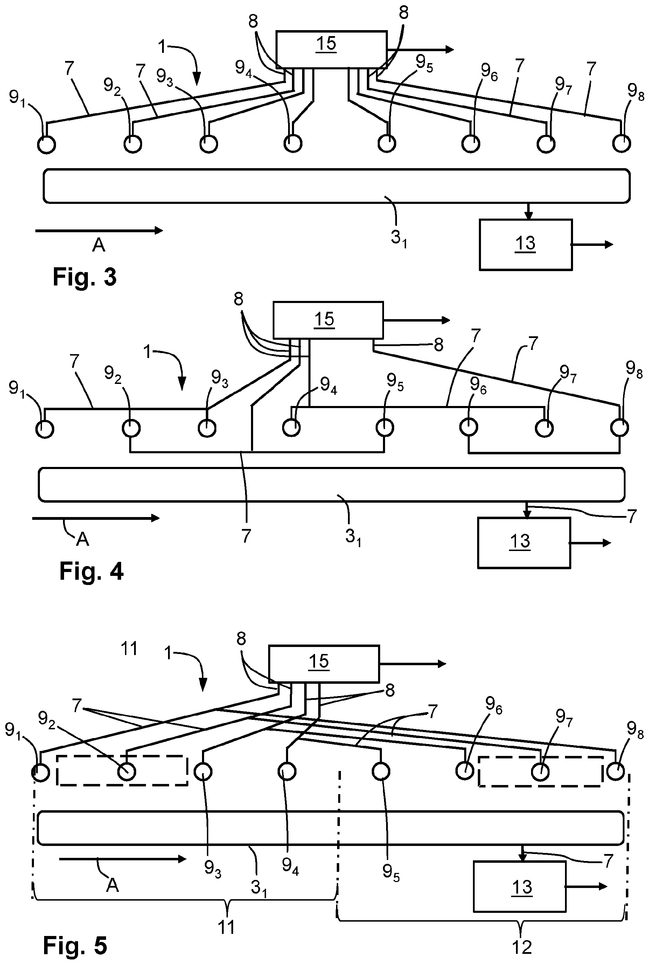

**Figure 3** shows a further embodiment of a sensor 1 for an impact detection and protection system with one sensor element 3, of a first type and eight sensor elements 9₁, 9₂,...,9₈ of a second type. The sensor elements 9₁, 9₂,...,9₈ of the second type are arranged along the axis A of the sensor 1. The sensor element 3₁ of the first type is a capacitive sensor element and electrically connected by a wiring 7 to an amplifier 13. The amplifier 13 amplifies a signal (change of capacity due to an impact) from the capacitive sensor element. The eight sensor elements 9₁, 9₂,...,9₈ of the second type are piezoelectric sensor elements, which are electrically connected by a wiring 7 to an amplifier 15. Consequently, the amplifier 13 receives eight channels 8. The amplifier 15 amplifies a signal (change of electric charge due to an impact) from each piezoelectric sensor element. In case of an impact the eight sensor elements 9₁, 9₂,...,9₈ of the second type provide a spatial resolution with regard to the location of impact.

**Figure 4** shows another embodiment of a sensor 1 for an impact detection and protection system with one sensor element 3, of a first type and eight sensor elements 9₁, 9₂,...,9₈ of a second type. The sensor elements 9₁, 9₂,...,9₈ of the second type are arranged along the axis A of the sensor 1. The sensor element 3₁ of the first type is a capacitive sensor element and the eight sensor elements 9₁, 9₂,...,9₈ of the second type are piezoelectric sensor elements. The eight sensor elements 9₁, 9₂,...,9₈ of the second type are electrically connected by a wiring 7 to an amplifier 15. The amplifier 15 has four channels 8. The wiring 7 (grouping) is such that the first sensor element 9, and the third sensor element 9₃ are connected to the first channel 8, the second sensor element 9₂ and the fifth sensor element 9₅ are connected to the second channel 8, the fourth sensor element 9₄ and the seventh sensor element 9₇ are connected to the third channel 8 and the sixth sensor element 9s and eighth sensor element 9s are connected to the fourth channel 8. The amplifier 15 amplifies a signal (change of electric charge due to an impact) from each piezoelectric sensor element. The embodiment shown here has the advantage of a reduced wiring 7. In case of an impact the eight sensor elements 9₁, 9₂,...,9s of the second type provide a location resolution (left, right or middle of the sensor 1) with regard to the location of impact.

**Figure 5** shows another embodiment of a sensor 1 for an impact detection and protection system which provides location detection of an impact by a variant of the redundancy. The basic construction of the sensor 1 is the same as shown in Fig. 3 and 4. The difference is in the wiring 7. The eight sensor elements 9₁, 9₂,...,9₈ of the second type are electrically connected by the wiring 7 to the amplifier 15. The amplifier 15 has four channels 8. The wiring 7 (grouping) is such that the first sensor element 9₁ and the eighth sensor element 9s are connected to the first channel 8, the second sensor element 9₂ and the seventh sensor element 9₇ are connected to the second channel 8, the third sensor element 9₃ and the sixth sensor element 9₆ are connected to the third channel 8 and the fourth sensor element 9₄ and the fifth sensor element 9₅ are connected to the fourth channel 8. The amplifier 15 amplifies a signal (change of electric charge due to an impact) from each piezoelectric sensor element. The embodiment shown here has the advantage of a reduced wiring 7. In case of an impact the eight sensor elements 9₁, 9₂,...,9₈ of the second type provide a location resolution with regard to the location of impact. There is no possibility to discriminate between a left area 11 and a right area 12 of the sensor 1.

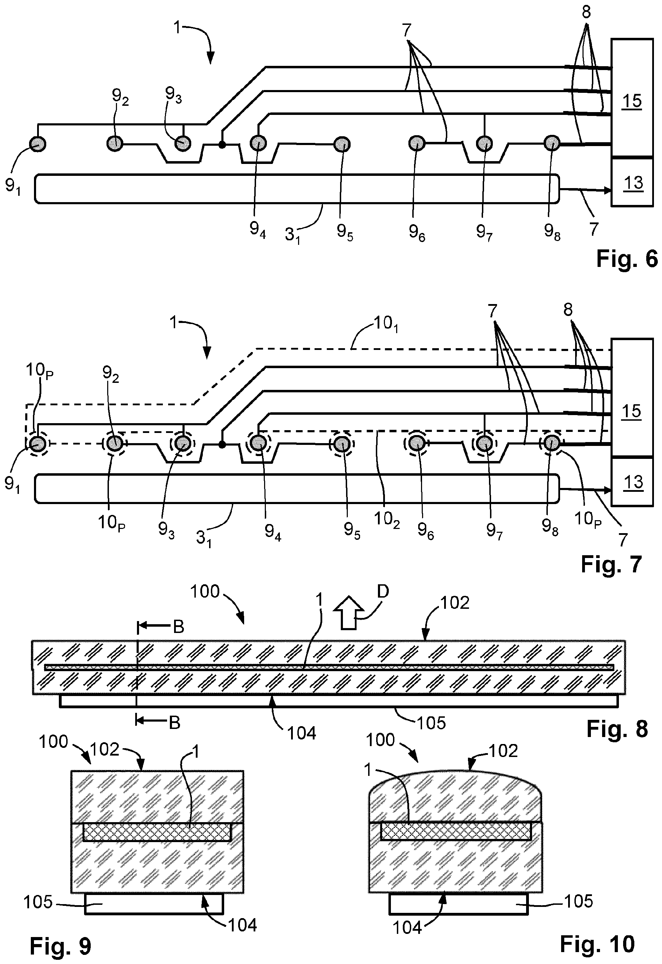

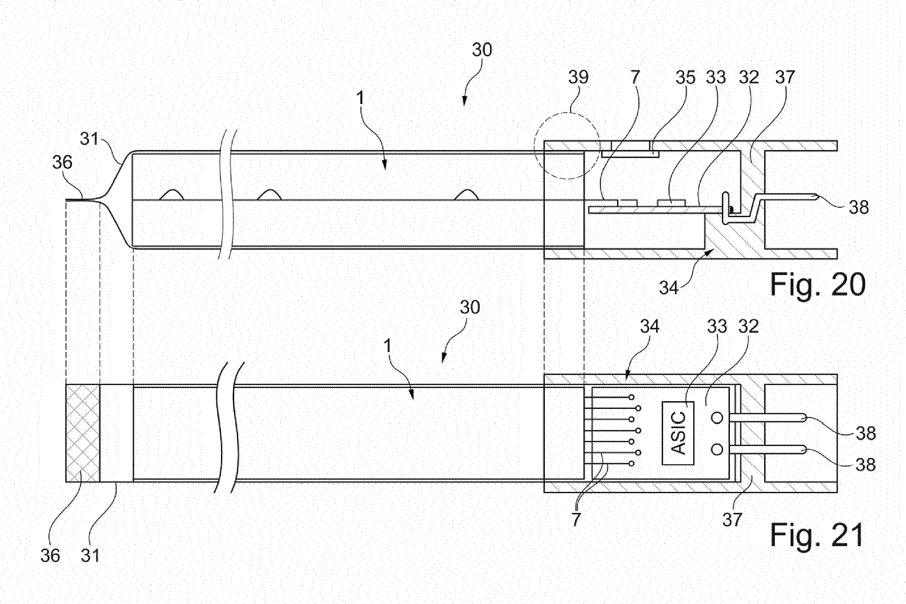

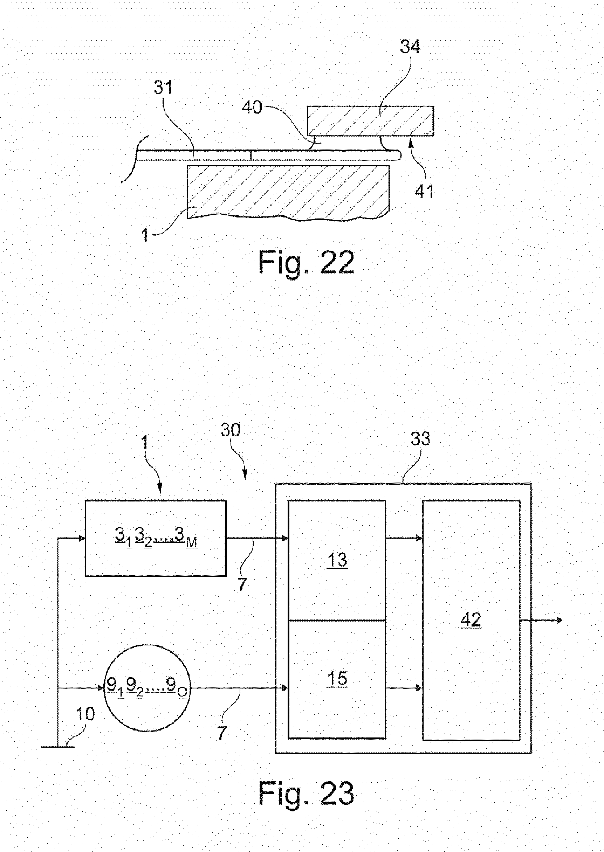

**Figure 6** shows an embodiment of the sensor 1 for an impact detection and protection system which is similar to the embodiment of Fig. 3. The embodiment shown here differs from the embodiment of Fig. 3 in that the amplifier 13 for the capacitive sensor element 3₁ and the amplifier 15 for piezoelectric sensor elements 9₁ to 9₈ are combined in one printed circuit board 32 (see Fig. 21 and 22). The printed circuit board 32 (side mounted electronics) is provided at one end of the sensor 1. This arrangement simplifies the wiring 7 to the amplifier 13 for the capacitive sensor element 3₁ and the amplifier 15 for piezoelectric sensor elements 9₁ to 9₈. As known from the embodiment of Fig. 3 the amplifier 15 for piezoelectric sensor elements has 4 channels.

**Figure 7** shows a variant of the embodiment of the sensor 1 for an impact detection and protection system as shown in Fig. 6. Each of the eight sensor elements 9₁, 9₂,...,9₈ of the second type (piezoelectric sensor elements) is provided with a ground 10_{P}. The ground 10_{P} of the first, second and third sensor element 9₁, 9₂, and 9₃ of the second type is connected to a first ground 10₁. The ground 10_{P} of the fourth, fifth, sixth, seventh and eighth sensor element 9₄, 9₅, 9₆, 9₇ and 9₈ of the second type is connected to a second ground 10₂. The first ground 10, and the second ground 10₂ are connected to the amplifier 15 for piezoelectric sensor elements.

**Figure 8** shows a schematic view of a carrier 100 for the sensor 1. The sensor 1 is sandwiched between a first foam element 102 and a second foam element 104. The first foam element 102 and the second foam element 104 are arranged such that the sensor 1 is completely enclosed within the first foam element 102 and the second foam element. At least the second foam element 104 has a flat outline for mechanical integration. For example, the carrier 100 is mounted with the second foam element 104 to a structural element 105 of a vehicle (not shown). The first foam element 102 faces into a driving direction D of the vehicle.

**Figure 9** and **10** show various embodiments of the carrier 100 for the sensor 1 taken along the section B-B of Figure 8. The sensor 1 is completely enclosed by the first foam element 102 and the second foam element 104. The first foam element 102 of the carrier 100 shown in Fig. 9 has a flat surface, pointing in the driving direction D (see Fig. 8). The first foam element 102 of the carrier 100 shown in Fig. 10 has a curved surface, pointing in the driving direction D (see Fig. 8). It is to be understood that the design of the surface, pointing in the driving direction D, is not limited to the structures shown in Fig. 9 and 10. The variation of the design of carrier 100 depends on the size and the height of the sensor 1 to be enclosed.

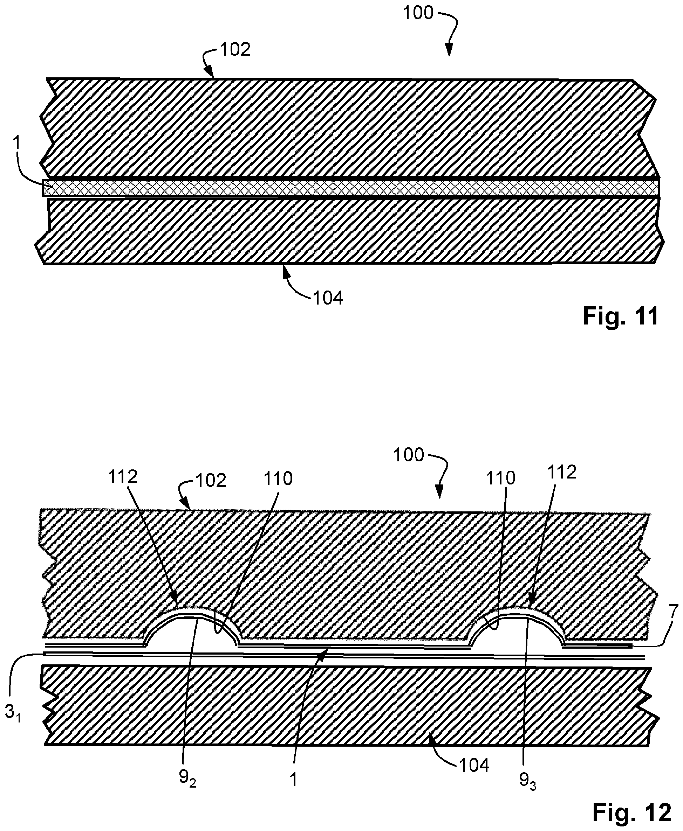

**Figure 11** shows a partial view of the sensor 1 layered between a first foam element 102 and a second foam element 104 of the carrier 100. As mentioned above, the sensor 1 comprises at least one the sensor element 3₁, 3₂,...,3_{M} of a first type (here not shown) and a plurality of sensor elements 9₁, 9₂,...,9_{O} of a second type (here not shown). The sensor 1 is sandwiched between the first foam element 102 and the second foam element 104.

**Figure 12** shows a partial cross-sectional view of an embodiment of the formation of the carrier, which houses the piezoelectric sensor elements and the capacitive sensor element. The first foam element 102 has a plurality of dome shaped cavities 110, wherein the sensor elements 9₁, 9₂,...,9_{O} of the second type (piezoelectric sensor elements) are placed in the apex 112 of each dome shaped cavity 110. The wiring 7 for the sensor elements 9₁, 9₂,...,9_{O} of the second type are as well arranged between the first foam element 102 and the second foam element 104. A single sensor element 3₁ of the first type (capacitive sensor element) is placed as well between the first foam element 102 and the second foam element 104.

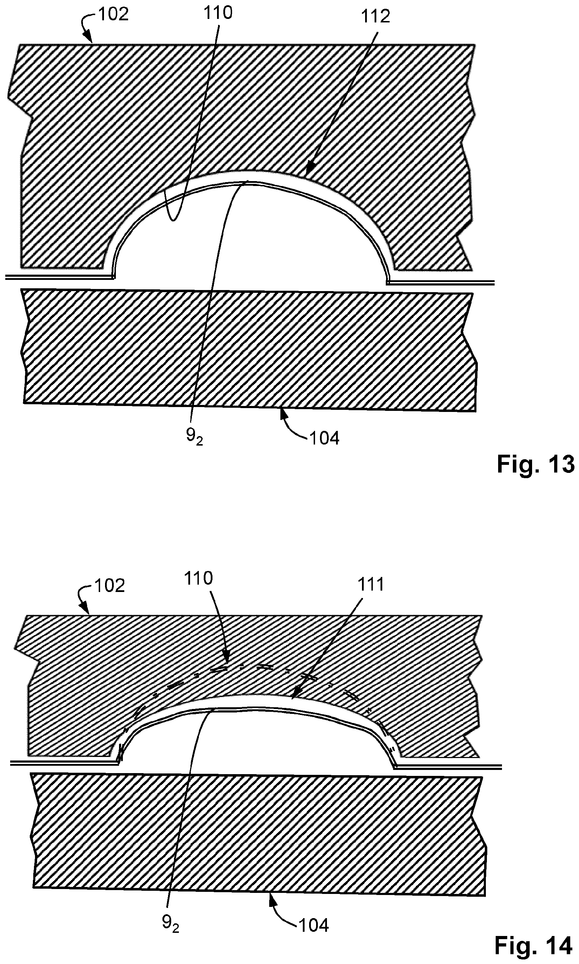

**Figure 13** shows an enlarged view of the placement of a piezoelectric sensor element (sensor elements 9₁, 9₂,..., 9_{O} of the second type) within the carrier 100. The sensor element 9₂, of the second type is placed in the apex 112 of the not deformed dome shaped cavity 110. The deformed state, due to a collision, is shown in **Figure 14****.** A collision of the vehicle (not shown) causes the not deformed dome shaped cavity 110 to be transferred to a deformed dome shaped cavity 111. The deformed dome shaped cavity 111 causes a deformation of the piezoelectric sensor element (sensor element 9₂ of the second type) within the deformed dome shaped cavity 111. The deformation causes a voltage signal in the piezoelectric sensor element which is sensed by the amplifier 15 (see Figures 3-7) for the piezoelectric sensor element.

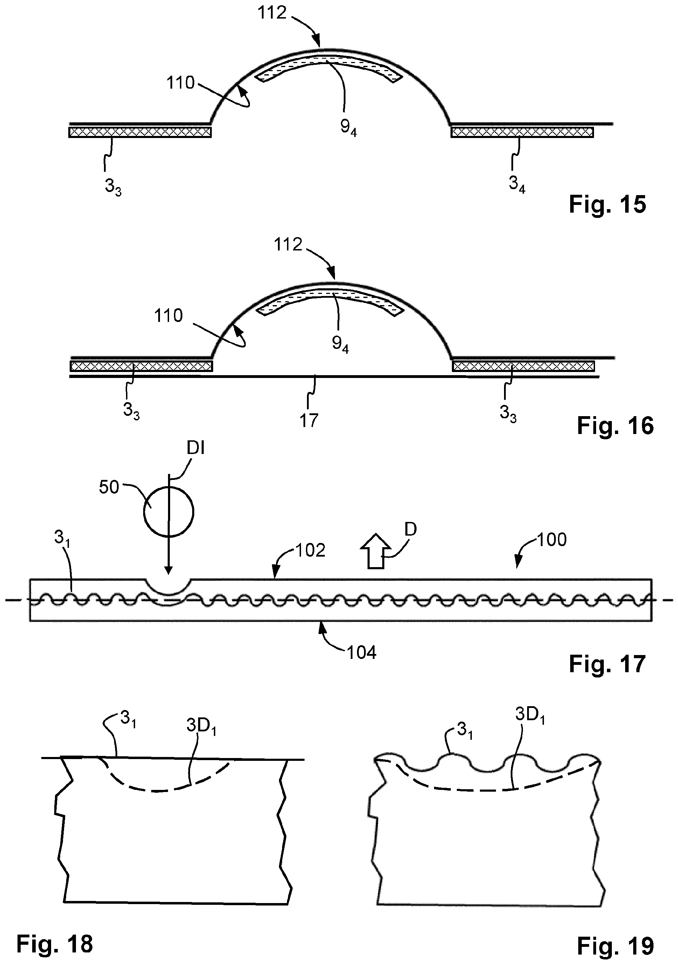

**Figure 15** shows a schematic, partial view of the arrangement of the sensor elements 3₃ and 3₄ of the first type (capacitive sensor elements; electrodes) and of the sensor element 9₄ of the second type (piezoelectric sensor element). The piezoelectric sensor element is placed in the apex 112 of the dome shaped cavity 110. Another embodiment of the arrangement of the sensor elements 3₃ and 3₄ of the first type (capacitive sensor elements, electrodes) and of the sensor elements 9₄ of the second type (piezoelectric sensor element) is shown in **Figure 16****.** Here the piezoelectric sensor element is placed in the apex 112 of the dome shaped cavity 110. The sensor elements 3₃ and 3₄ of the first type (capacitive sensor elements, electrodes) are covered by a sealing layer 17.

**Figure 17** shows an embodiment of the arrangement of at least one sensor element 3₁ of the first type (capacitive sensor element) inside the carrier 100. The sensor element 3₁ of the first type is arranged in an undulating manner between the first foam element 102 and the second foam element 104. An object 50 deforming at least the first foam element 102 in the impact direction DI causes a mechanical strain on the at least one sensor element 3₁ of the first type.

**Figure 18** shows the effect of a collision on the sensor element 3₁ of the first type (capacitive sensor element) in the carrier 100 (see for example Fig 8). The sensor element 3₁ of the first type is provided in a not undulating manner. An impact of an object 50 (see Fig. 17) causes a strained sensor element 3D, of the first type. The strain might cause a rupture of the strained sensor element 3D, of the first type, which results in a malfunction of the sensor 1. The effect of a collision on an undulated sensor element 3₁ of the first type (capacitive sensor element) according to the arrangement shown in the embodiment of Fig. 17 is shown in **Figure 19****.** A collision here causes less strain on the sensor element 3₁ of the first type than in the example of Fig. 18.

**Figure 20** shows a schematic side view and **Figure 21** shows a schematic top view of the integration of the sensor 1 in a sensor device 30 which is ready to use in a vehicle (not shown). The sensor 1 is enclosed in a sealing 31, which seals the sensor and the associated electronics (for example, sensor 1) against the influence of humidity and/or dirt and provides an electromagnetic shielding for the electronics. The sensor 1 is connected by the required wiring 7 to a printed circuit board 32. The printed circuit board 32 encompasses the amplifier 13 for capacitive sensor elements (not shown here) and the amplifier 15 for piezoelectric sensor elements (not shown here). More precisely, the amplifiers 13 and 15 are realised by an ASIC 33 on the printed circuit board 32. The printed circuit board 32 is enclosed in a housing 34, which is closed at one end by a connector 37 and on the opposite end by the sensor 1. A pressure equalizing system 35 is provided in order to keep the pressure inside the housing 34 approximately at a constant level. The connector 37 has connector pins 38 which provide an electrical connection to a control system (not shown) of the vehicle. The carrier 100 with the enclosed sensor 1 is surrounded by a sealing 31. At one end the sealing is closed by a welded end 36 and at an opposite end the sealing 31 is attached to an inner wall 41 of the housing 34.

**Figure 22** is an enlarged view of the area marked with a dashed circle 39 in Fig. 20. The sensor 1 is fixed to the housing 34. The sealing 31 is attached by one side to the sensor 1 and by the opposite side to the housing 34. The attachment of the sealing 31 to the housing 34 is achieved with a glue 40. In the embodiment shown here the sealing 31 is attached to an inner wall 41 of the housing 34.

**Figure 23** shows a schematic view of the arrangement of the components of the sensor device 30. The at least one sensor element 3₁, 3₂,...,3_{M} of a first type (capacitive sensor element) and the sensor elements 9₁, 9₂,...,9_{O} of a second type (piezoelectric sensor elements) of the inventive sensor 1 are connected with a wiring 7 to the amplifier 13 for capacitive sensor elements and the amplifier 15 for piezoelectric sensor elements. Additionally, the at least one sensor element 3₁, 3₂,...,3_{M} of a first type and the sensor elements 9₁, 9₂,...,9_{O} of a second type are connected to a common ground 10. The amplifier 13 for capacitive sensor elements and the amplifier 15 for piezoelectric sensor elements is realized on one chip, for example the ASIC 33. Both amplifiers 13 and 15 are connected to a digital interface 42 which is a digital, two-wire interface 42 for sensors in vehicle electronics.

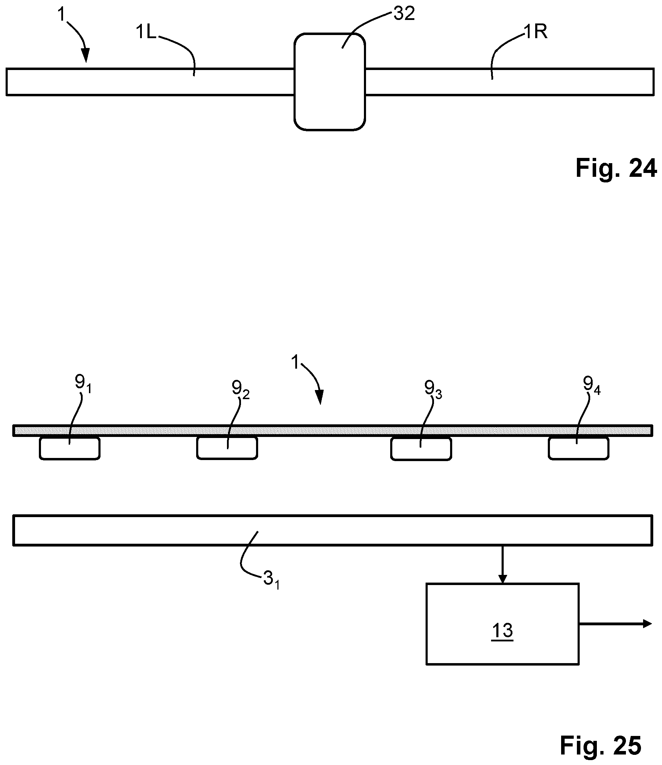

**Figure 24** shows a schematic view of the placement of the printed circuit board 32 (electronics) in relation to the sensor 1. The printed circuit board 32 is placed in the middle of the sensor 1 so that the sensor 1 has a left sensor 1L and a right sensor 1R.

**Figure 25** shows an alternative embodiment of the inventive sensor 1. The inventive sensor 1 comprises one sensor element 3, of a first type and a plurality sensor elements 9₁, 9₂,...,9_{O} of a second type which are accelerometers. The accelerometers of the sensor 1 are placed close to the bumper (not shown) of the vehicle.

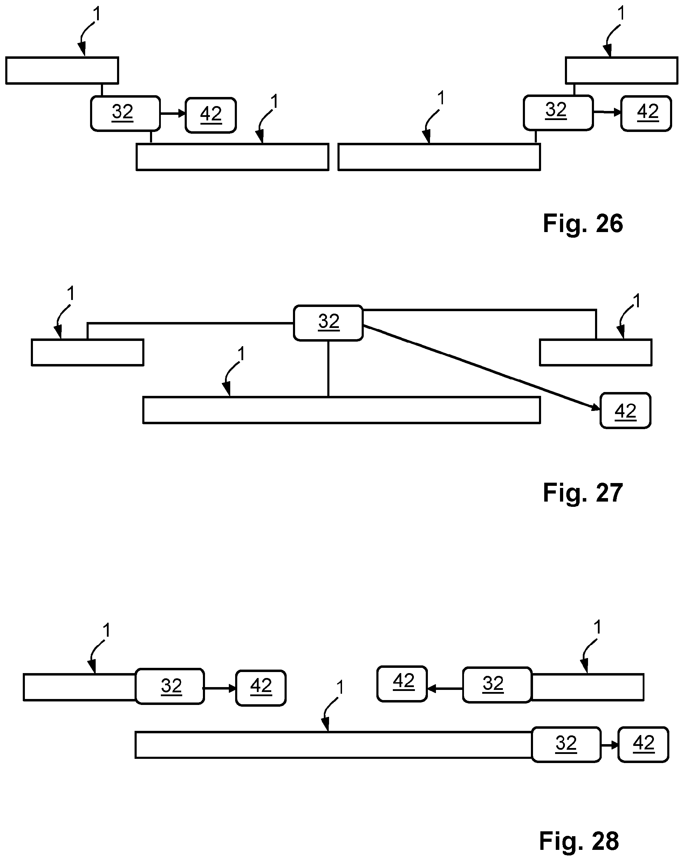

**Figure 26** shows a schematic view of a further embodiment of the placement of the printed circuit boards 32 (electronics) in relation to the inventive sensors 1. Four individual sensors 1 are arranged symmetrically, wherein two of the four sensors 1 are connected to one printed circuit board 32. Each of the two printed circuit boards 32 is connected to a respective digital interface 42.

**Figure 27** shows a schematic view of an additional embodiment of the placement of the printed circuit board 32 (electronics) in relation to the inventive sensors 1. Three individual sensors 1 are arranged such that the three sensors 1 are connected to a single common printed circuit board 32. The printed circuit board 32 is connected to a digital interface 42.

**Figure 28** shows a schematic view of an additional embodiment of the placement of printed circuit boards 32 (electronics) in relation to three individual inventive sensors 1. Each individual sensor 1 is connected to a respective printed circuit board 32. Each of the three printed circuit boards 32 is connected to a digital interface 42.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### List of reference numerals

- 1: Sensor
- 1L: left sensor
- 1R: right sensor
- 3₁, 3₂,...,3_{M}: sensor element of a first type
- 5₁, 5₂,...,5_{N}: zone
- 6: effective range
- 7: wiring
- 8: channel
- 9₁, 9₂,...,9_{O}: sensor element of a second type
- 10: common ground
- 10₁: first ground
- 10₂: second ground
- 10_{P}: ground piezoelectric elements
- 11: left area
- 12: right area
- 13: first amplifier
- 15: second amplifier
- 17: sealing layer
- 30: sensor device
- 31: sealing
- 32: printed circuit board
- 33: ASIC
- 34: housing
- 35: pressure equalizing system
- 36: welded end
- 37: connector
- 38: connector pin
- 39: circle
- 40: glue
- 41: inner wall
- 42: digital interface
- 50: object
- 100: carrier
- 102: first foam element
- 104: second foam element
- 105: structural element
- 110: dome shaped cavity
- 111: deformed dome shaped cavity
- 112: apex
- A: axis
- B-B: section
- D: driving direction
- DI: impact direction

## Claims

1. An impact detection and protection system for a vehicle: **characterized by**:
• a sensor (1);
• a carrier (100) for the sensor (1) having a first foam element (102) and a second foam element (104), wherein the first foam element (102) and the second foam element (104) sandwich, enclose and are in mechanical contact with the sensor (1) and the carrier (100) is mountable to a structural element (105) of the vehicle;
• wherein the sensor (1) comprises:
∘ at least one sensor element (3₁, 3₂,...,3_{M}) of a first type of the sensor (1) is oriented along the axis (A) of the sensor (1), wherein the at least one sensor element (3₁, 3₂,..., 3_{M}) of the first type is a capacitive sensor;
∘ a plurality of sensor elements (9₁, 9₂,...,9_{O}) of a second type of the sensor (1) are oriented and distributed along the axis (A) of the sensor (1), wherein the plurality of sensor elements (9₁, 9₂,..., 9_{O}) of the second type are piezoelectric sensor elements; and
• a plurality of dome shaped cavities (110) are formed in the first foam element (102) so that each of the dome shaped cavities (110) defines an apex (112) which is open to the second foam element (104), wherein one single piezoelectric sensor element (9₁, 9₂,..., 9_{O}) of the plurality of sensor elements (9₁, 9₂,...,9_{O}) is attached to each apex (112).

2. The impact detection and protection system as claimed in claim 1, wherein the sensor (1) comprises one sensor element (3₁) of the first type and the plurality of sensor elements (9₁, 9₂,..., 9_{O}) of the second type, wherein the plurality of sensor elements (9₁, 9₂,..., 9_{O}) of the second type are oriented and are separated equally or unequally along the axis (A) of the sensor (1).

3. The impact detection and protection system as claimed in any of the preceding claims, wherein at least one sensor element (3₁, 3₂,..., 3_{M}) of the first type is electrically connected by a wiring (7) to a first amplifier (13).

4. The impact detection and protection system as claimed in any of claims 1 to 3, wherein each of the plurality of sensor elements (9₁, 9₂,..., 9_{O}) of the second type is electrically connected by a wiring (7) to a second amplifier (15).

5. The impact detection and protection system as claimed in any of claims 1 to 3, wherein two of the plurality of sensor elements (9₁, 9₂,..., 9_{O}) of the second type are commonly connected by a wiring (7) to a second amplifier (15).

6. The impact detection and protection system (30) as claimed in claim 1, wherein the first foam element (102) and the second foam element (104) are in mechanical contact with the least one capacitive sensor element (3₁, 3₂,..., 3_{M}) and the piezoelectric sensor elements (9₁, 9₂,..., 9_{O}) of the sensor (1), wherein at least the first foam element (102) is deformed by an impacting object (50) and thereby cause a deformation and an electrical signal from the at least one capacitive sensor element (3₁, 3₂,..., 3_{M}) and the piezoelectric sensor elements (9₁, 9₂,..., 9_{O}) within the deformed dome shaped cavity (111).

7. The impact detection and protection system (30) as claimed in claim 1, wherein the at least one capacitive sensor element (3₁, 3₂,..., 3_{M}) of the sensor (1) is supported by the second foam element (104) of the carrier (100).

8. The impact detection and protection system (30) as claimed in claim 1, wherein the at least one sensor element (3₁) of the first type is arranged in an undulating manner between the first foam element (102) and the second foam element (104).

9. The impact detection and protection system (30) as claimed in any of claims 1, 6 or 7, wherein the carrier (100) with the enclosed sensor (1) is surrounded by a sealing (31) which has at one end a welded end (36) and at an opposite end the sealing (31) is attached to an inner wall (41) of a housing (34) which is closed at one end by a connector (37) for electrical connection.

10. The impact detection and protection system (30) as claimed in claim 9, wherein the sealing (31) is attached to the inner wall (41) of the housing (34) with a glue (40).

11. The impact detection and protection system (30) as claimed in any of claims 9 to 10, wherein a printed circuit board (32) with the first amplifier (13) an the second amplifier (15) is positioned inside the housing (34).

12. The impact detection and protection system (30) as claimed in claim 11, wherein the second amplifier (15) has four channels (8) and the wiring (7) for the plurality of piezoelectric sensor elements (9₁, 9₂,..., 9_{O}) is such that the plurality of piezoelectric sensor elements (9₁, 9₂,..., 9_{O}) are grouped and connected to the four channels (8).

## Patentansprüche

1. Ein Aufprallerkennungs- und -schutzsystem für ein Fahrzeug:
**gekennzeichnet durch**:
• einen Sensor (1);
• einen Träger (100) für den Sensor (1) mit einem ersten Schaumstoffelement (102) und einem zweiten Schaumstoffelement (104), wobei das erste Schaumstoffelement (102) und das zweite Schaumstoffelement (104) den Sensor (1) sandwichartig umschließen und in mechanischem Kontakt mit dem Sensor (1) stehen und der Träger (100) an einem Strukturelement (105) des Fahrzeugs montierbar ist;
• wobei der Sensor (1) umfasst:
∘ mindestens ein Sensorelement (3₁, 3₂,..., 3_{M}) eines ersten Typs des Sensors (1), das entlang der Achse (A) des Sensors (1) ausgerichtet ist, wobei das mindestens eine Sensorelement (3₁, 3₂,..., 3_{M}) des ersten Typs ein kapazitiver Sensor ist;
∘ eine Vielzahl von Sensorelementen (9₁, 9₂,..., 9_{O}) eines zweiten Typs des Sensors (1), die entlang der Achse (A) des Sensors (1) ausgerichtet und verteilt sind, wobei die Vielzahl von Sensorelementen (9₁, 9₂,..., 9_{O}) des zweiten Typs piezoelektrische Sensorelemente sind; und
• eine Vielzahl von kuppelförmigen Hohlräumen (110), die in dem ersten Schaumstoffelement (102) ausgebildet sind, so dass jeder der kuppelförmigen Hohlräume (110) einen Scheitelpunkt (112) definiert, der zu dem zweiten Schaumstoffelement (104) offen ist, wobei ein einzelnes piezoelektrisches Sensorelement (9₁, 9₂,..., 9_{O}) der Vielzahl von Sensorelementen (9₁, 9₂,..., 9o) an jedem Scheitelpunkt (112) angebracht ist.

2. Das Aufprallerkennungs- und -schutzsystem nach Anspruch 1, wobei der Sensor (1) ein Sensorelement (3₁) des ersten Typs und die Vielzahl von Sensorelementen (9₁, 9₂,..., 9_{O}) des zweiten Typs umfasst, wobei die Vielzahl von Sensorelementen (9₁, 9₂,..., 9_{O}) des zweiten Typs gleich oder ungleich entlang der Achse (A) des Sensors (1) ausgerichtet und getrennt sind.

3. Das Aufprallerkennungs- und -schutzsystem nach einem der vorhergehenden Ansprüche, wobei mindestens ein Sensorelement (3₁, 3₂,..., 3_{M}) des ersten Typs über eine Verdrahtung (7) mit einem ersten Verstärker (13) elektrisch verbunden ist.

4. Das Aufprallerkennungs- und -schutzsystem nach einem der Ansprüche 1 bis 3, wobei jedes der Vielzahl der Sensorelemente (9₁, 9₂,..., 9_{O}) des zweiten Typs durch eine Verdrahtung (7) mit einem zweiten Verstärker (15) elektrisch verbunden ist.

5. Das Aufprallerkennungs- und -schutzsystem nach einem der Ansprüche 1 bis 3, wobei zwei der Vielzahl der Sensorelemente (9₁, 9₂,..., 9_{O}) des zweiten Typs über eine Verdrahtung (7) mit einem zweiten Verstärker (15) gemeinsam verbunden sind.

6. Das Aufprallerkennungs- und -schutzsystem (30) nach Anspruch 1, wobei das erste Schaumstoffelement (102) und das zweite Schaumstoffelement (104) in mechanischem Kontakt mit dem mindestens einen kapazitiven Sensorelement (3₁, 3₂,..., 3_{M}) und den piezoelektrischen Sensorelementen (9₁, 9₂,..., 9_{O}) des Sensors (1) sind, wobei zumindest das erste Schaumstoffelement (102) durch ein auftreffendes Objekt (50) verformt wird und dadurch eine Verformung und ein elektrisches Signal von dem mindestens einen kapazitiven Sensorelement (3₁, 3₂,..., 3_{M}) und den piezoelektrischen Sensorelementen (9₁, 9₂,..., 9_{O}) innerhalb des verformten kuppelförmigen Hohlraums (111) verursacht wird.

7. Das Aufprallerkennungs- und -schutzsystem (30) nach Anspruch 1, wobei das mindestens eine kapazitive Sensorelement (3₁, 3₂,..., 3_{M}) des Sensors (1) von dem zweiten Schaumstoffelement (104) des Trägers (100) getragen wird.

8. Das Aufprallerkennungs- und -schutzsystem (30) nach Anspruch 1, wobei das mindestens eine Sensorelement (3₁) des ersten Typs zwischen dem ersten Schaumstoffelement (102) und dem zweiten Schaumstoffelement (104) wellenförmig angeordnet ist.

9. Das Aufpralldetektions- und -schutzsystem (30) nach einem der Ansprüche 1, 6 oder 7, wobei der Träger (100) mit dem umschlossenen Sensor (1) von einer Dichtung (31) umgeben ist, die an einem Ende ein geschweißtes Ende (36) aufweist und an einem gegenüberliegenden Ende die Dichtung (31) an einer Innenwand (41) eines Gehäuses (34) befestigt ist, das an einem Ende durch einen Stecker (37) zum elektrischen Anschluss verschlossen ist.

10. Das Aufprallerkennungs- und -schutzsystem (30) nach Anspruch 9, wobei die Dichtung (31) mit einem Klebstoff (40) an der Innenwand (41) des Gehäuses (34) befestigt ist.

11. Das Aufprallerkennungs- und -schutzsystem (30) nach einem der Ansprüche 9 bis 10, wobei eine Leiterplatte (32) mit dem ersten Verstärker (13) und dem zweiten Verstärker (15) innerhalb des Gehäuses (34) angeordnet ist.

12. Das Aufprallerkennungs- und -schutzsystem (30) nach Anspruch 11, wobei der zweite Verstärker (15) vier Kanäle (8) aufweist und die Verdrahtung (7) für die Vielzahl von piezoelektrischen Sensorelementen (9₁, 9₂,..., 9_{O}) derart ist, dass die Vielzahl von piezoelektrischen Sensorelementen (9₁, 9₂,..., 9_{O}) gruppiert und mit den vier Kanälen (8) verbunden sind.

## Revendications

1. Un système de détection et de protection d'impact pour un véhicule :
**caractérisé par** :
• un capteur (1) ;
• un support (100) pour le capteur (1) comportant un premier élément en mousse (102) et un second élément en mousse (104), le premier élément en mousse (102) et le second élément en mousse (104) prenant en sandwich le capteur (1) et étant en contact mécanique avec le capteur (1) et le support (100) pouvant être monté sur un élément structurel (105) du véhicule ;
• dans lequel le capteur (1) comprend :
∘ au moins un élément de capteur (3₁, 3₂,...,3_{M}) d'un premier type du capteur (1) orienté le long de l'axe (A) du capteur (1), au moins un élément de capteur (3₁, 3₂,..., 3_{M}) du premier type étant un capteur capacitif ;
∘ une pluralité d'éléments de capteur (9₁, 9₂,...,9_{O}) d'un second type de capteur (1), orientés et distribués le long de l'axe (A) du capteur (1), la pluralité d'éléments de capteur (9₁, 9₂,..., 9_{O}) du second type étant des éléments de capteur piézoélectriques ; et
• une pluralité de cavités en forme de dôme (110) formées dans le premier élément en mousse (102) de telle sorte que chacune des cavités en forme de dôme (110) définisse un sommet (112) ouvert au second élément en mousse (104), un seul élément de capteur piézoélectrique (9₁, 9₂,..., 9_{O}) de la pluralité d'éléments de capteur (9₁, 9₂,..., 9_{O}) étant attaché à chaque sommet (112).

2. Le système de détection et de protection d'impact selon la revendication 1, dans lequel le capteur (1) comprend un élément de capteur (3₁) du premier type et la pluralité d'éléments de capteur (9₁, 9₂,..., 9_{O}) du second type, dans lequel la pluralité d'éléments de capteur (9₁, 9₂,..., 9_{O}) du second type sont orientés et séparés de manière égale ou inégale le long de l'axe (A) du capteur (1).

3. Le système de détection et de protection d'impact selon l'une quelconque des revendications précédentes, dans lequel au moins un élément de capteur (3₁, 3₂,..., 3_{M}) du premier type est relié électriquement par un câblage (7) à un premier amplificateur (13).

4. Le système de détection et de protection d'impact selon l'une des revendications 1 à 3, dans lequel chacun de la pluralité d'éléments capteurs (9₁, 9₂,..., 9_{O}) du second type est relié électriquement par un câblage (7) à un second amplificateur (15).

5. Le système de détection et de protection d'impact selon l'une des revendications 1 à 3, dans lequel deux de la pluralité d'éléments de détection (9₁, 9₂,..., 9_{O}) du second type sont reliés ensemble par un câblage (7) à un second amplificateur (15).

6. Le système de détection et de protection d'impact (30) selon la revendication 1, dans lequel le premier élément en mousse (102) et le second élément en mousse (104) sont en contact mécanique avec au moins un élément de capteur capacitif (3₁, 3₂,..., 3_{M}) et les éléments de capteur piézoélectriques (9₁, 9₂,..., 9_{O}) du capteur (1), dans lequel au moins le premier élément en mousse (102) est déformé par un objet d'impact (50) et provoque ainsi une déformation et un signal électrique provenant de l'au moins un élément de capteur capacitif (3, 3₁₂,..., 3_{M}) et des éléments de capteur piézoélectrique (9₁, 9₂,..., 9_{O}) à l'intérieur de la cavité en forme de dôme déformé (111).

7. Le système de détection et de protection d'impact (30) selon la revendication 1, dans lequel l'au moins un élément de capteur capacitif (3₁, 3₂,..., 3_{M}) du capteur (1) est supporté par le second élément en mousse (104) du support (100).

8. Le système de détection et de protection d'impact (30) selon la revendication 1, dans lequel l'au moins un élément capteur (3₁) du premier type est disposé de manière ondulatoire entre le premier élément en mousse (102) et le second élément en mousse (104).

9. Le système de détection et de protection d'impact (30) selon l'une des revendications 1, 6 ou 7, dans lequel le support (100) avec le capteur (1) enfermé est entouré d'un joint (31) qui a à une extrémité une extrémité soudée (36) et à une extrémité opposée le joint (31) est attaché à une paroi intérieure (41) d'un boîtier (34) qui est fermé à une extrémité par un connecteur (37) pour la connexion électrique.

10. Le système de détection et de protection d'impact (30) selon la revendication 9, dans lequel le joint (31) est attaché à la paroi intérieure (41) du boîtier (34) à l'aide d'une colle (40).

11. Le système de détection et de protection d'impact (30) selon l'une des revendications 9 à 10, dans lequel une carte de circuit imprimé (32) avec le premier amplificateur (13) et le second amplificateur (15) est placée à l'intérieur du boîtier (34).

12. Le système de détection et de protection d'impact (30) selon la revendication 11, dans lequel le second amplificateur (15) possède quatre canaux (8) et le câblage (7) de la pluralité d'éléments de capteurs piézoélectriques (9₁, 9₂,..., 9_{O}) est tel que la pluralité d'éléments de capteurs piézoélectriques (9₁, 9₂,..., 9_{O}) sont regroupés et connectés aux quatre canaux (8).
